Europäisches Patentamt

European Patent Office

Office européen des brevets

(11) Publication number: **0 453 044 A1**

## EUROPEAN PATENT APPLICATION

(21) Application number: 91200916.4

(22) Date of filing: 17.04.91

(51) Int. Cl.5: **G06F 15/72**

(30) Priority: 20.04.90 BE 9000441

(43) Date of publication of application:
23.10.91 Bulletin 91/43

(84) Designated Contracting States:
BE DE ES FR GB IT

(71) Applicant: NEURONES CARTOON
Rue de Harlez, 39/B

B-4000 Liège 1(BE)

(72) Inventor: Coenen, Philippe
Pas Baillard 1
Berleur(BE)

(74) Representative: Callewaert, Jean et al
Bureau Gevers S.A. rue de Livourne 7 bte 1
B-1050 Bruxelles(BE)

(54) A method and apparatus for storing and animation of data.

(57) The present invention relates to a method and an apparatus for storing data, particularly data for motion picture cartoon, of at least one object, whereby at least an outline of a first and a second view is drawn and whereby a set of identifiers identifying said views is stored, and wherein said views are identified by identification curves representing said outline and wherein said identification curves are divided into curve sections the three-dimensional coordinates of their ends and an index is stored as an identifier. The stored data is than processed for animation purpose.

Fig. 6.

The present invention is related to a method and apparatus for storing data, particularly data for motion picture cartoon, of at least one object, whereby at least an outline of a first and a second view different from the first view is drawn and whereby a set of identifiers, identifying the object, are stored.

Such a method is known from the document SERBI of J.F. Rotge published in "Mécanique Matériaux Electricité" n° 403 of January-February 1984, pp. 21 to 25. The fetching of two views of a same object enables to restore the co-ordinates of the volume in the space. The memorized data enable then, by the animation of the object, a representation of the object having a volume. For obtaining a sequence of images, in view of creating for example the movement of an object, in particular for motion cartoon or a sequence of a movy, it is necessary to modelize beforehand the object that one wishes to impose to the movement.

A problem of the known method is that it does not form an adequate solution for an efficient storing enabling to limit the capacity of the memory where the set of identifiers have to be stored. Moreover the known storage method imposes the use of heavy computers which are able to process such an amount of data. That type of computers, even if they are very efficient relating to CAD-CAM, are not appropriated in motion picture cartoon.

It is an object of the invention to realize a method for storing data enabling a more selective storage and thus to use less memory capacity, -which will also enable to use less heavy computers, more appropriate to motion picture cartoon.

To this end a method according to the invention is characterized in that :
- said views being identified by means of identification curves, reproducing at least said outlines ;
- said identification curves being divided into curve sections for dividing a surface of said object into partial surfaces which are each delimited by at least three identification curve sections ;
- there is determined for each curve section co-ordinates of their ends in said first and second view and whereby a same index is assigned thereto ;
- there is determined three-dimensional coordinates of said ends of each curve sections on the basis of said co-ordinates of said ends in said first and second view to which a same index has been assigned ;
- elements of said set of identifiers being formed by taking for an element to be formed each time said index and said three-dimensional coordinates to which it has been assigned.

By choosing carefully the three-dimensional co-ordinates of the ends of each section, it is possible to substantially reduce the amount of data to be stored without loosing essential information relating to the geometry of the object to be stored. Indeed the division into curve sections enables to distinguish the essential points for determining the geometry of the object. By introducing into the elements of the set of identifiers the three-dimensional co-ordinates of the end of the curve sections, essential elements are introduced relating to the geometry of the object. By determining the curve sections, the user is able to determine by himself the number of points to be stored in function of the amount of complexity of the object. Moreover the use of an index enables to easily find back the link which links the different elements of the set of identifiers and thus by fetching the stored data to have an easy access to the different elements carrying a same index. The use of an index enables also, due to the link which it represents among the co-ordinates, to generate functions starting from the elements having a common index.

A first preferred embodiment of the method according to the invention is characterized in that said first and second views are obtained by projecting said identification curves on a first, respectively a second reference plane, each comprising a different set of two crossing axes of a three-dimensional space. This facilitates the formation of two views and simplifies the determination of the three-dimensional co-ordinates.

Preferably, said three-dimensional co-ordinates are determined by eliminating among said co-ordinates in said first and second view to which a same index has been assigned, one of said co-ordinates common to said first and second view. A simplification of the method is thus obtained.

A second preferred embodiment of a method according to the invention is characterized in that each curve section is divided into segments of which three-dimensional co-ordinates of their ends being determined, which co-ordinates are then included into said element comprising said index of said divided curve section. The division into segments of the curve sections enables a more systematic storage.

According to another embodiment of the invention the identification curves of the first and the second views are divided into an equal number of segments. This simplifies the storage.

The data memorized according to the method of the invention are very suitable to be used in an animation process characterized in that at least one partial surface of said object is generated by interpollation of the co-ordinates of said ends of said sections delimiting said partiel surfaces to be generaled.

A first preferred embodiment of an animation method of the invention is characterized in that the co-ordinates of the ends of the sections delimiting said partial surface are mapped into a topological space, and wherein a meshing of the partial surface is then carried out in the topological space with forming polygons with at least three vertices, each segment end being part of at least one line of said meshing ends and in that the co-ordinates of the meshing nodes are then determined and subsequently mapped again by reverse mapping into the three-dimensionsal space. By operating in a topological space, each partial surface is normalized, which partial surface being reduced to a plane polygon. The co-ordinates of the meshing nodes are thus easily determined.

A second particularly preferred embodiment of the animation method according to the invention is characterized in that polygons with four vertices are formed and for each of said partial surface, a first, respectively a second generating line and a first, respectively a second directrix, which are mutually opposite two by two are selected, among the four associated curve sections delimitating said partial surface and in that the meshing is carried out by linking each said end on the first generating line, respectively first directrix to at least one of said ends on the second generating line, respectively second directrix, whereby the generation of said partial surfaces is obtained by letting the first generating line being transformed stepwise into the second generating line, whereby a linear interpolation is applied during that transformation at each step between the first generating line in its initial position and the actual position of said first generating line. This is like scanning each partial surface one by one by a curve section which is associated to that partial surface, especially the first generating line. The conceiver can even control the interpolation step and thus the fineness degree of the meshing accordingly to the needs imposed especially by the complexity degree of the object surface.

Advantageously, a meshing optimization criterion is applied during the meshing, which criterion consists in detecting within a polygon a predetermined change of flatness at the object surface. The number of polygons and consequently the number of meshing lines may thus be reduced by joining the polygons the respective flatness of which is submitted to a variation less than a chosen value.

According to a third preferred embodiment of the invention, the values of said surface parameter of the object are determined at a polygon vertex lying within said partial surface by linear interpolation of the values of the surface parameter of the object at the adjacent curve sections surrounding said vertex. The state of each point lying on the surface of the object may thus be determined in function of the value of said parameter at each curve section surrounding said point.

Advantageously, animation functions are stored making motion picture cartoon creation possible.

The invention also relates to a device for application of the method.

Further details and advantages of the invention will appear from the more detailed specification described hereinafter by way of example and comprising some embodiments of the method and the apparatus according to the invention, which are illustrated by the accompanying drawings. The reference digits are referring to the drawings.

Figure 1 represents a block-diagram of the apparatus according to the invention.

Figure 2 represents a block-diagram of the method according to the invention.

Figure 3, respectively 4, represents a first, respectively a second view of the object.

Figure 5 represents the object identified by its respective identification curves according to the invention.

Figure 6 represents the object of Figure 5 after meshing.

Figure 7 represents an object surface divided into partial surfaces according to the invention.

Figure 8 represents a partial surface of the surface according to Figure 7 by dividing the curve sections into segments according to the invention.

Figure 9 represents the partial surface of Figure 8 mapped into the topological space.

Figure 10 represents a meshing according to the invention of the partial surface according to Figure 9.

Figure 11 represents the partial surface according to Figure 10 mapped again into the three-dimensional space.

Figure 12 represents the association according to the invention of generating lines, respectively directrices to a partial surface assigning local reference systems.

Figure 13 represents the formation of an intermediate generating line.

Figures 14 and 15 illustrate the assignment of an index.

The same reference digits on the different Figures are referring to identical or analogous elements.

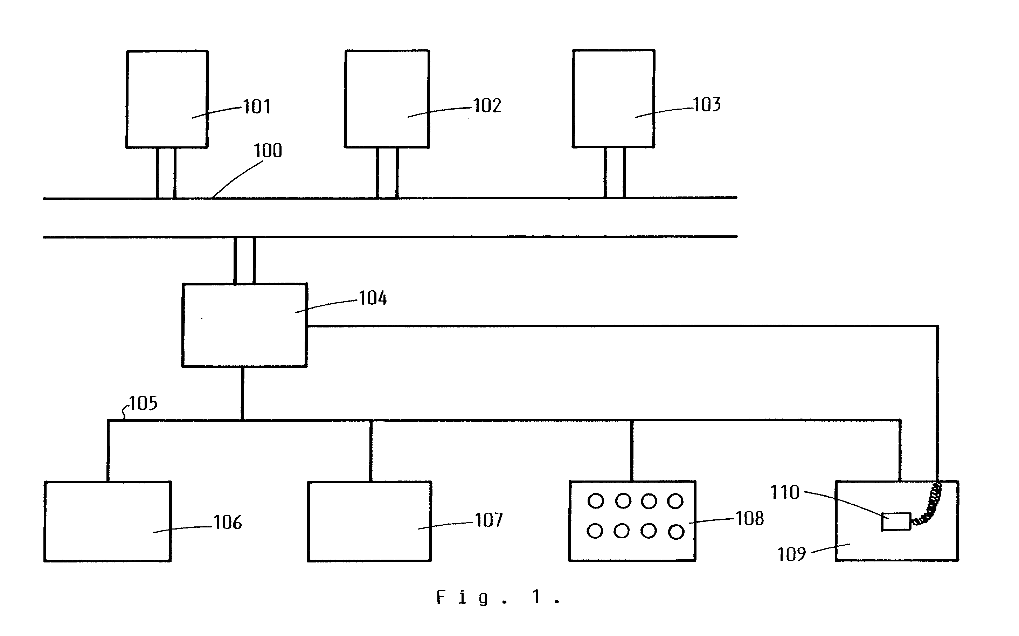

Figure 1 illustrates a data processing apparatus according to the invention. The apparatus comprises a communication bus 100 for transporting informations (data, addresses and instructions) to which a data processing unit 101 is connected, for example a microprocessor. A first (ROM) 102 and a second memory (RAM) 103 are also connected to the bus 100. The first memory is for instance for storing instructions whereas the second one is for storing data. An input-output interface 104 is also connected to the bus 100. That interface organises the data and instruction traffic between the bus and an external memory 106, for example a floppy disc reader, connected by a line 105 to said interface. The line 105 is also connected to a display unit 107, a key board 108 and an input tablet 109 provided with a mouse 110.

As to motion picture cartoon, it is quite often satisfactory to have relatively simple objects with outlines of which the requisite precision degree is relatively low. This is the key for the preparing phases of the method according to the invention.

In creating motion picture cartoon by computer, essentially two steps are distinguished. A first step comprises the storing of data which identify the object or objects 1 which will be used in the motion picture cartoon whereas a second step comprises the animation of the stored objects. The way in which the object will be stored will necessarily have consequences on the animation step.

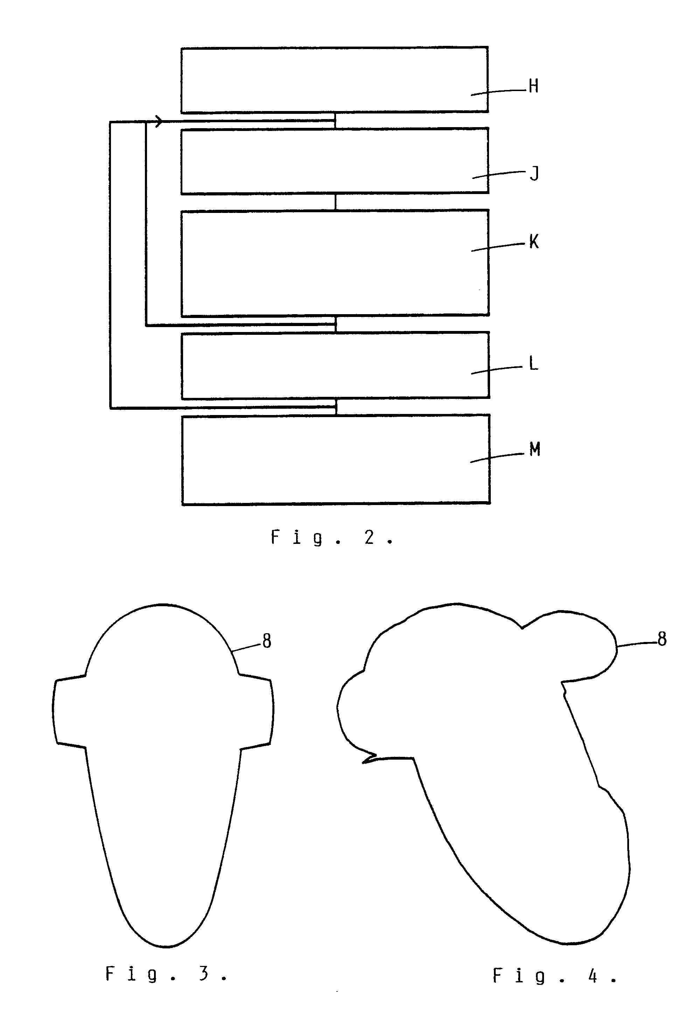

The first step comprises essentially a co-ordinate fetching and storage phase (H). The second step comprises essentially a modelling phase (J), a real time animation phase (K), the so-called overall generating phase of the object (L) and possibly the display and storing phase (M) as indicated in Figure 2.

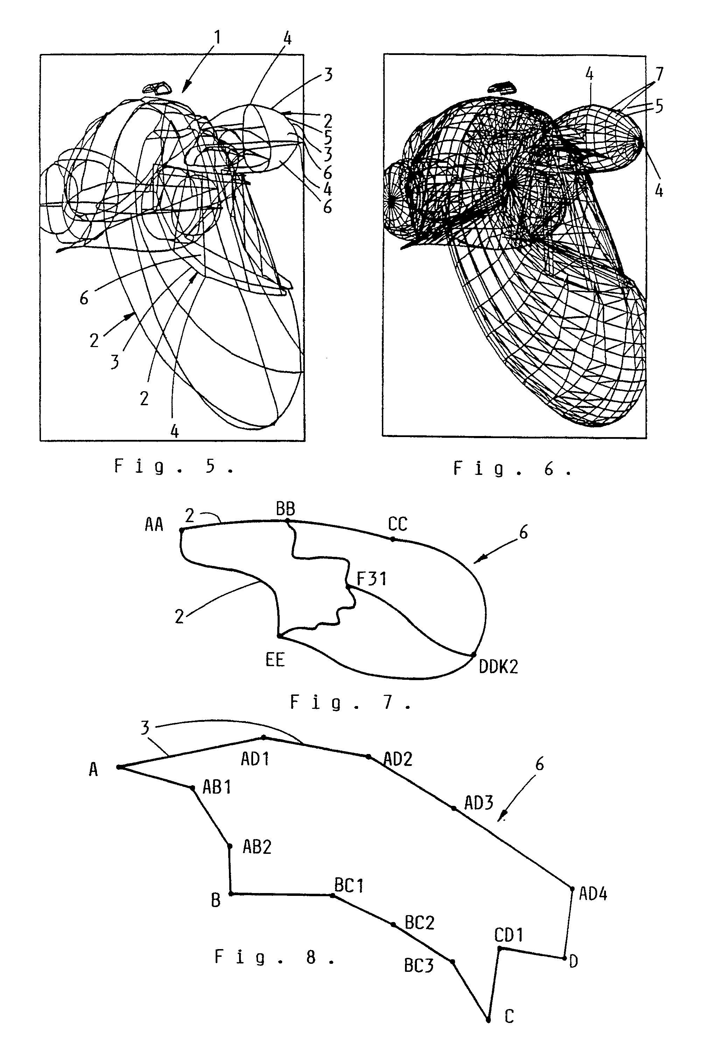

In the first step, the conceiver realizes a first and a second mutually different view of the object, preferably mutually orthogonal, for example a front and a side face view, as shown in Figures 3 and 4. In that first phase of the first step, the conceiver draws, for instance by hand, the main lines of the object, i.e. each time the outline 8, which lines bear together preferably all the artistic and geometrical information determining the object. Said main lines thus form the idenfication curves of the object. Said views are obtained by projecting said identification curves on different planes, eventually mutually perpendicular, for example the reference planes XY and XZ in the orthogonal reference system XYZ.

In the second phase of the first step, each of said views is stored. For this purpose, the conceiver divides each identification curve into curve sections 2, which, preferably, are subsequently divided themselves into curve segments 3. He subsequently determines the co-ordinates of each section or segment end, for instance by putting the drawing onto the tablet 109 and by using the mouse 110 and he assigns them an index. Those co-ordinates as well as the indexes are subsequently stored into a memory, for example a floppy disc.

This is illustrated in Figure 7 where the represented surface is stored by storing per curve section 2, and especially by storing each time the ends AA and BB, CC, DDK2, EE and F31 of the latter. The microprocessor 101 is subsequently given the instruction to generate the three partial surfaces 6 which are thus created and separated from each other by the respective curve sections BB-F31, F31-DDK2 and F31-EE.

In order to determine the curve sections 2 and the curve segments 3, a relatively large liberty margin is left to the conceiver. In order to determine the sections, the conceiver will choose the information bearing lines, which means that he is going to parametrize the curves in essentially linear segments and subsequently store the co-ordinates of the segment ends. For this purpose, he passes with the mouse along the curve to be parametrized and picks up each time the co-ordinates of a point where he stops to modify a direction of an essentially linear path. In order to form a curve section, he will for example rely on a curve which forms a set, for example the curve of an arm or a leg, which he subsequently will divide into segments 3. The segments are formed as well for the curves of the first as for the second view.

In order to determine the three-dimensional coordinates, the co-ordinates obtained by projecting the curve in said different planes are each time taken. The microprocessor thus receives the co-ordinates X and Y, respectively X and Z, for the projection in the XY, respectively XZ plane. Under control of the microprocessor one of the x values will subsequently be eliminated provided that each projection has been divided into an equal number of segments and the values X, Y and Z will be stored, in order to store a three-dimensional value. In case both projections are not divided into an equal number of segments, both projections are combined and, eventually, the lacking co-ordinates are determined by linear extrapolation or interpolation. This allows the conceiver not to worry about the precise number of segments.

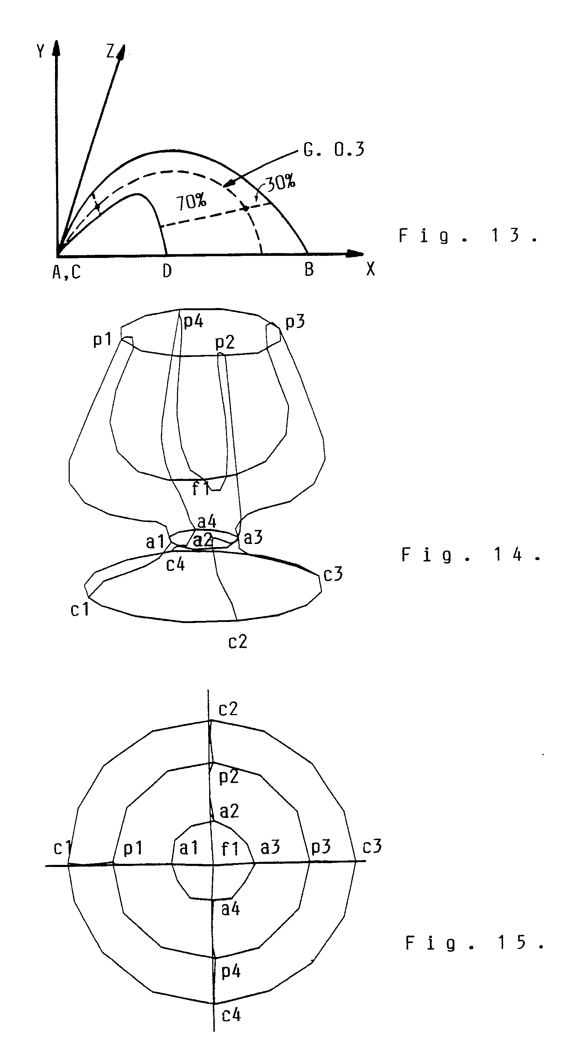

After having determined the three-dimensional co-ordinates of the ends of a curve section or a curve segment, an index is assigned to those co-ordinates, which index enables the soft ware, when the data is stored, to make a link between the different curves and thus between the different parts of the object. The assignment of index is illustrated in figures 13 and 14 which show a front view and a top view of an object, in this case, a cup. The object comprises four distinct planes to which four different indexes have been assigned. Thus index C has been assigned to a plane forming the foot of the cup while the indexes A, B and F have been respectively assigned to a plane forming the handhold, the upper border and the bottom of the cup. There will thus be assigned to all the curve sections of which the extremities belong to the plane forming the foot an index C. A curve

$C_1$ $C_2$ will thus be memorized by storing the three-dimensional co-ordinates of the point $C_1$ and $C_2$ and by assigning to them an index C. The index co-ordinate set thus forms an element of a set of identifiers. The set of identifiers then being formed by a set of elements each time representing the co-ordinates and the index of the different curves forming the object. The index can be formed by a simple letter or a number, but it can also comprise more details relating to the nature of the co-ordinates to which it has been assigned. When an index is for example assigned to the curve sections which ends in an articulation point, the index will comprise an indication that it belongs to an articulation point, which is for example realizes by choosing an index formed by a code word of which certain bits indicate that it belongs to an articulation.

The index can also comprises a parameter indicating the surface to which the co-ordinates belongs, or a colour to be applied on the section of the curve or its degree of inequality (break or smooth).

After the storage phase, the object may be real time displayed, at this stage of the method, as stored for example in the RAM memory 103, i.e. as a skeleton comprising as single lines said identification curves as illustrated on Figure 5. That interactive displaying makes it possible to the conceiver to adapt, modify or correct his skeleton progressively. Under this form, the object is saved for example as a file for enabling the animation of the object. At this stage, the object is still elementary but sufficiently realistic to be animated.

After the storage of the data, for example on a floppy disc, it is possible to use them for animation purposes. Therefore, the object stored under an elementary form as illustrated on Figure 5 will be transformed into a more complex object as illustrated on Figure 6.

In order to proceed to the animation phase, the data stored as described hereabove will first be fetched. Due to the fact that the stored set of identifiers comprises for each element an index the data can now be fetched by using the index. It will indeed be enough to call the different indexes, for example by means of a table also stored and representing the set of indexes, the co-ordinates to which a same index has been assigned will then easily be found due to the link they have with the index. In the example shown in figure 14 one thus obtains by calling index P, the ends $P_1$, $P_2$, $P_3$ and $P_4$ and by calling the indexes A, C, P and F, those sets of co-ordinates representing the cup. Moreover, since the co-ordinates are three-dimensional co-ordinates, a two-dimensional view will easily be first formed which will then be used to form a three-dimensional view as illustrated in Figure 14.

The use of indexes thus enables the rapidly rebuilt the object starting from the stored data.

After fetching the coordinates, the curves will then be formed between the co-ordinates in order to generate the surface of the object. In order to form those curves, use will be made of Bezier, B-, C- or $\beta$.Splines curve equation. This technique is for example described in the article of Edward Angel published in Computer Graphics ISBN 20113548.5.

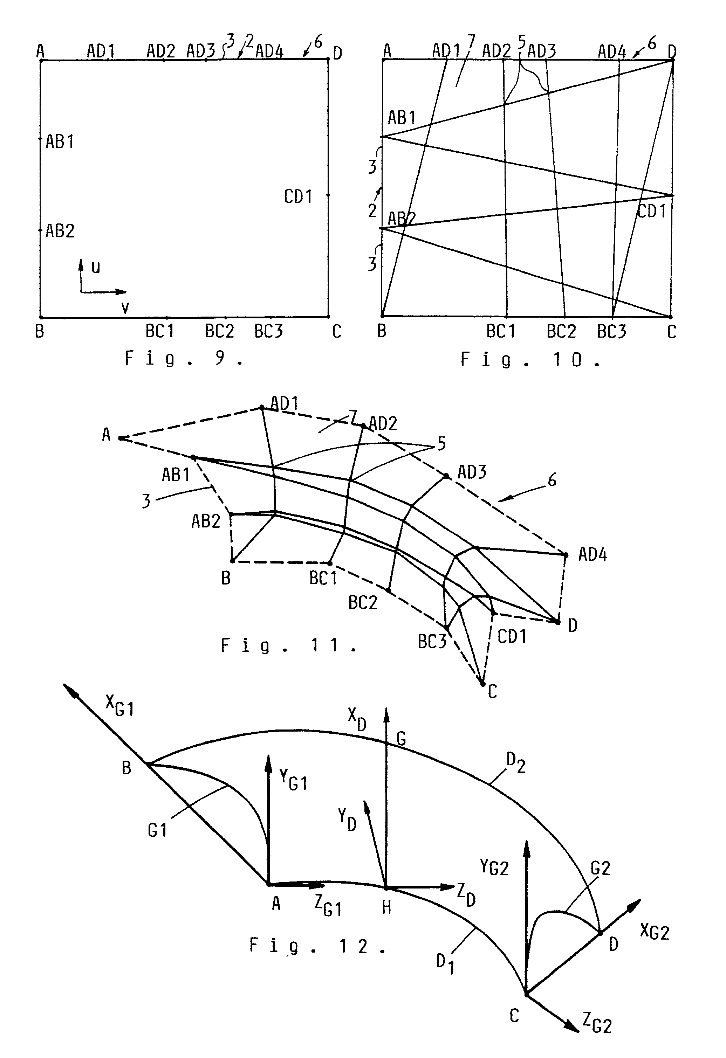

First the number of useful points to be calculated should now be determined as well as their relative position in the partial surface to be generated in order to limit the calculations. Therefore, the conceiver will select points on the partial surface there where the supplied information provokes a substantial quantitative change as to the nature of the surface, for example as to the non-uniformity. Figure 8 illustrates the partial surface 6 with its four vertices A, B, C, D of the four curve sections delimiting the partial surface 6, i.e. at each vertex A, B, C, D of the latter and at each end 4 of the segments 3, information on the nature of the object such as geometrical information is provided. In addition, those different points are stored in the memory and are thus available. In order to complete each of the partial surfaces, i.e. in order to obtain information at points located inside said partial surfaces, said given points will be used between the vertices A and B : AD1, AD2, AD3, AD4 ; between the vertices A and B : AB1, AB2 ; between the vertices B and C : BC1, BC2, BC3 ; between the vertices C and D : CD1. The conceiver choses for example B - A and C - D as the first, respectively the second generating line and B - C and A - D as the first, respectively the second directrix.

Subsequentely, said points on the curve sections are flagged and their position is stored in % of the length of the corresponding curve section. Thus, for instance, there is obtained 30 % for AB2 by taking B as origin. This operation is repeated for each segment end for each curve section of the partial surface.

Thereafter, the positions of all those points are mapped again into a normalized space, called topological space, with two dimensions u, v, whereby the length of each associated curve section 2 is reduced to unity. Each normalized variable u, v varies from 0 at the chosen origin, here B, to unity at the opposite curve section end. A square is thus obtained represented on Figure 9 with vertices A, B, C, D, especially the same as the vertices of the partial surface 6 represented on Figure 8. The segment end points located between the vertices keep the same respective positions in the normalised space along each of the curve sections on which they are respectively located (Figure 9), as in the three-dimensional space according to Figure 8.

Meshing nodes are selected as points located inside a normalised polygon, formed in this example by a quadrilateral. Those meshing nodes are obtained by linking different end points disposed on mutually associated curve sections. Preferably, the end points located on the first generating line $G1$, respectively the first directrix $D1$, are linked each time to at least one end point located on the second generating line $G2$, respectively the second directrix $D2$. The intersection points between the different meshing lines thus obtained form then the meshing nodes 5 as shown in Figure 10. The reverse mapping of that meshing quadrilateral from the normalised space to the original three-dimensional space provides a partial surface of the original three-dimensional object with supplementary points located within curve sections delimitating that partial surface. Those supplementary points 5 correspond to the meshing nodes calculated in the normalised space. A refined partial surface 6 is thus obtained enabling a better approximation of a desired three-dimensional object. Preferably, a meshing is chosen consisting in meshing lines which intersect as perpendicularly as possible at the meshing nodes, for example under an angle comprised between 70 and 90° in the normalised space. The calculation of the position of the meshing nodes in the real three-dimensional space will be described hereinafter. After having calculated those points 5 in the three-dimensional space, the latter will be linked with the same topology, i.e. with the same disposition, as in the normalised space (cfr. Figures 10 and 11). The meshing operation is achieved for example by means of the input tablet or by means of a stored software.

The partial surface is preferably formed in the normalised space by a quadrilateral ABCD as represented on Figure 9. The case of the triangle can easily be reduced to the one of the quadrilateral by considering two vertices AB as being coincident in the corresponding curve section as being reduced to a single point. In the case of the triangle, the second generating line or respectively the second directrix is chosen as curve section reduced to one point.

The scanning of the partial surface is carried out by moving the first generating line from its initial position $G_1$ to the second generating line $G_2$ through intermediate stages each time by an interpolation step. Passing from one stage to another is always done by letting coincide each of the opposite ends of the first generating line in progression with the corresponding opposite directrices. The first generating line in progress is thus submitted to a deformation by streching out or by contracting depending on whether the first, second directrices mutually diverge or respectively converge in the progression direction of the first generating line. The deformation of the first generating line also relates to the fact that the points to be determined at each step in the path, are points of the object surface. For this purpose, the form of the first generating line is obtained by interpolation, preferably linear, between the forms of the first generating line in its initial position $G_1$ and the second generating line $G_2$. At each stage of the path of the first generating line along the associated directrices, the latter must undergo a scale change which is proportional to the distance between the first and the second directrices taking into account the extension or respectively the contraction of the latter at each stage due to the distance at that stage between the first and the second directrices. The scale reduction is carried out by letting the three coordinates of the generating line develop in an identical way. It is also possible to carry out the scale reduction by letting follow the distance variations between the first and the second directrices only in the single dimension according to the principal direction of the generating line corresponding to the direction of said distance between the first and the second directrices. In that case, the other co-ordinates expand linearly between the values of the first and the second generating lines.

An average plane and a local reference system with three dimensions with the origin on the first directrix as shown in Figure 12 being made to corresponde to the first and the second generating lines. The first generating line is then modified in that local reference system to transform progressively to the form of the second generating line. That progression of the first generating line along the directrices is carried out linearly in that there is progressed with an equal percentage of its length along each directrix and by applying preferably a linear interpolation. At each direction change of one of the directrices, the co-ordinates of a corresponding directrix local reference system $X_D Y_D Z_D$ are calculated. The angle between the directrix local reference system and each generating line local reference system corresponding respectively to the first and the second generating line, $X_{G1} Y_{G1} Z_{G1}$ and $X_{G2} Y_{G2} Z_{G2}$ is also determined. When the generating local reference system is known in one point of the directrices, it is enough to assign thereon local coordinates of the local interpolated generating line for obtaining a series of points on the surface.

Hereinafter, an example of a calculation method of points located within the curve sections of a partial surface is described. A local reference system $X_{G1} Y_{G1} Z_{G1}$, respectively $X_{G2} Y_{G2} Z_{G2}$ for the first, respectively the second generating line $G_1$ $G_2$

are first determined. A reference system is formed by a trihedron of orthogonal axes defined by an origin, chosen by the conceiver, and by three mutually perpendicular directions. Subsequently, the co-ordinates of all the desired points of the first, respectively the second generating line are determined in their respective local reference system. In addition, it is assumed that said both local reference systems mutually superpose and that the respective generating lines share a commun point thereon. The respective situation of said both local reference systems for $G_1$ and $G_2$ in the three-dimensional space is shown in Figure 12. For the generating line $G_1$, the three axes of the local reference system have point A as origin. The direction of the axis $X_{G1}$ is associated to the straight line AB in the direction from A to B. Subsequently, the axis $Y_{G1}$ is determined by the bissecting line of the projections of the first and the last tangential vector A, respectively B, of the generating line $G_1$ on the plane. The axis $Z_{G1}$ is perpendicular to the plane formed by the two axes $X_{G1}$ and $Y_{G1}$. And the direction of the latter is given by the fact that it is assumed that the reference system is right-handed as shown in Figure 12. The reference plane of the generating line $G_1$ is the plane XY, which is called the first bissecting plane.

As to the generating line $G_2$, the three axes of the corresponding local reference system have point C as origin. The straight line CD indicates the direction of the axis X of that reference system, the direction of which is indicated by the vector CD. The axes Y and Z of the reference system are located in the plane which is perpendicular to the axis X, the axis Z being itself perpendicular to the axis Y of that plane. The axis $Y_{G2}$ is determined by the value of a parameter varying between 0 and 1. When that parameter is equal to unity, the axis Y is determined by the bissectrix of the projection of the first and the last tangential vector in C, respectively D, of the generating line $G_2$ on that plane. When the paramater equals 0, the axis $Y_{G2}$ is parallel to the axis $Y_{G1}$. When the value of the parameter is comprised between 0 and 1, a rotation angle is to be applied to Y, the value of which is given by multiplying the value of said parameter with the value of the angle comprised between the axis $Y_{G1}$ and the axis $Y_{G2}$. The reference plane of the generating line $G_2$ is the plane $XY_{G2}$, also called the last bissecting plane. The passing over of the generating $G_1$ from its initial stage to the final position determined by the position of the generating line $G_2$ gives the intermediate positions of the generating line. For that purpose, intermediate reference planes, reference systems and generating lines have to be determined. By way of example, for calculating the point with normalised co-ordinates equal to u = 0.3, respectively v = 0.7, the intermediate generating line must be determined at 30 % by taking as starting point a basis defined by the right segment DA as shown in Figure 13. Subsequently, one must locate oneself on that intermediate generating line $G_{0,3}$ in a point located at a distance of 70 % of the path comprised between the first and respectively the second directrix D1, D2 from the first directrix. Generally, the intermediate generating lines located at a distance of x% from the basis B1 are determined from the end generating lines G1 and G2 respectively at x% and 1-x% all being at scale of the first generating line G1 and particularly the same scale according to the three axes X, Y, Z. The actual geometry of the intermediate generating line to be created is determined by calculating the positions of the points as indicated hereabove. The reduction to scale is carried out by multiplying all the coordinates X, Y, Z of all the points of the obtained generating line by a scale factor determined by the ratio of the length between the basis of the thus calculated generating line and the actual distance between the directrices D1 and D2 at the actual location of the calculated intermediate generating line. This enables to respect the distance between the two directrices D1 and D2 at the intermediate generating line, which must keep all along its traject its opposite ends on the respective directrices D1 and D2.

Subsequently, the intermediate generating line is oriented. For that purpose, the directrix local reference system $X_D$, $Y_D$ and $Z_D$ is first determined. The axis $X_D$ is oriented from point H to G by linking those two points, said points being respectively located on the first and the second directrices D1 and D2. The average of the tangential vectors to the first, second directrices D1, D2 at the points H and respectively G is assigned to the axis $Z_D$. Finally, the axis $Y_D$ is perpendicular to the axis $X_D$ and $Z_D$ by assuming that the trihedron is right-handed. That sets the direction of the axis $Y_D$. When a directrix local reference system must be determined at the ends of the directrix, only a half a curve is provided to determine where the tangential vector is located. The half curve is then set forth by a constant curvature and the tangent is subsequently calculated. The directrix local reference systems are thus oriented continuously between two adjacent partiel surfaces. In order to set the intermediate lines, the angle between the directrix local reference system as found hereabove and the reference system of said intermediate generating line is first determined. Those two reference systems have one axis in commun, especially X and it is then enough to know the rotation angle between the axis $X_G$ of the intermediate generating line and the axis $Y_D$. That angle is known for both end generating lines $G_1$, $G_2$ as indicated hereinabove. Subsequently, linear interpolation will be applied to deduct therefrom the positions of the reference systems of the intermediate generating lines. There is supposed here that the interpolation of an angle is done for the shortest when a circle from 0 to 360° is considered. By repeating the process described hereabove for different intermediate generating lines between the end generating lines G1 and G2, and each time for as many points located on the respective intermediate generating lines as the conceiver desires, the latter obtains the generation of the corresponding partial surface and by repeating that for each of the partial surfaces of the three- dimensional object, he can generate also the entire three-dimensional object. He can subsequently display the three-dimensional object on the display unit 107. In addition, by applying animation functions to the several identification curves, a desired movement of the object is obtained.

The calculation can be carried out surface by surface and the result is each time stored on a storage carrier, such as a floppy disc, which makes it possible to recover the memory 103 before switching to the following surface. At the end of the whole process, the created three-dimensional object can be seen on the display unit 107 and the latter is in addition stored for instance on a floppy disc allowing to use it as such with an animation and display software.

For the curve sections and their segments, it is possible to carry out the interpolations by so-called Bezier-curves which are characterized by their non linear characteristics. This makes it possible to achieve a greater precision in the obtained drawings as to the three-dimensional object and its animation.

## Claims

1. A method for storing data, particularly data for motion picture cartoon, of at least one object, whereby at least an outline of a first and a second view different from the first view is drawn and whereby a set of identifiers, identifying the object, are stored, characterized in that :
   - said views being identified by means of identification curves, reproducing at least said outlines ;
   - said identification curves being divided into curve sections for dividing a surface of said object into partial surfaces which are each delimited by at least three identification curve sections ;
   - there is determined for each curve section coordinates of their ends in said first and second view and whereby a same index is assigned thereto ;

   - there is determined three-dimensional coordinates of said ends of each curve sections on the basis of said co-ordinates of said ends in said first and second view to which a same index has been assigned ;
   - elements of said set of identifiers being formed by taking for an element to be formed each time said index and said three-dimensional co-ordinates to which it has been assigned.

2. A method according to claim 1, characterized in that said first and second views are obtained by projecting said identification curves on a first, respectively a second reference plane, each comprising a different set of two crossing axes of a three-dimensional space.

3. A method as claimed in claim 1 or 2, characterized in that said three-dimensional co-ordinates are determined by eliminating among said co-ordinates in said first and second view to which a same index has been assigned, one of said co-ordinates common to said first and second view.

4. A method as claimed in onr of the claims 1-3, characterized in that each curve section is divided into segments of which three-dimensional co-ordinates of their ends being determined, which co-ordinates are then included into said element comprising said index of said divided curve section.

5. A method according to claim 4, characterized in that each curve section is divided into linear segments.

6. A method according to one of the claims 4 or 5, characterized in that the identification curves of the first and the second views are divided into an equal number of segments.

7. A method according to one of the claims 1 to 6, characterized in that at least one surface parameter of the object is associated to each curve section and in that said parameter is stored.

8. A method according to claim 7, characterized in that the colour to be associated to said curve section segment is chosen as a surface parameter of the object.

9. A method according to claim 7, characterized in that a code word indicating a degree and a non-uniformity of said object along said curve is chosen as surface parameter of said object.

10. An animation method using the data stored according to the method of anyone of the claims 1 to 9, characterized in that at least one partial surface of said object is generated by interpollation of the co-ordinates of said ends of said sections delimiting said partial surfaces to be generated.

11. A method according to claim 10 applied to data stored according to the method of claim 4, characterized in that the coordinates of the end of said sections delimiting said partial surface are transposed into a topological space, and wherein a meshing of the partial surface is then carried out in the topological space with form of polygons with at least three vertices, each segment end being part of at least one line of said meshing and in that the co-ordinates of the meshing nodes are then determined and subsequently transposed again by reverse transposition into the three-dimential space.

12. A method according to claim 11, characterized in that polygons with four vertices are formed and in that for each of said partial surface a first, respectively second generating line and a first respectively second directrix, which are mutually opposite two by two, are selected among the four associated curve sections delimitating said partial surface, and in that the meshing is carried out by linking each said end on the first generating line, respectively first directrix to at least one of said ends on the second generating line, respectively second directrix, whereby the generation of said partial surfaces is obtained by letting the first generating line being transformed stepwise into the second generating line, whereby a linear interpollation is applied during that transformation at each step between the first generating line in its initial position and the actual position of said first generating line.

13. A method according to one of the claims 11 or 12, characterized in that said meshing lines are formed so as to cross each other in the topological space at said meshing nodes at angles comprised between 70 and 90°.

14. A method according to one of the claims 10 to 13, characterized in that the meshing optimisation criterion is applied during the meshing which criterion consists in detecting within a polygon a predetermined change of flatness at the object surface.

15. A method according to one of the claims 10 to 14, characterized in that the values of said surface parameter of the object are determined at a polygon vertex laying within said partial surface by linear interpollation of the values of the surface parameter of the object at the adjacent curve sections surrounding said vertex.

16. A method as claimed in one of the claims 10 to 15, characterized in that said partial surface is generated by forming each time between said coordinates of said ends to which a same index has been assigned a curve by application of a Bézier, B-, C-or $\beta$ Splines curve equation.

17. A method according to one of the claims 12 to 16, characterized in that animation functions are stored.

18. A method according to claim 17, characterized in that said animation function is applied to the identification curve.

19. A device for memorising data, particularly data for motion picture cartoon, said data being related to at least an outline of a first and a second view different from the first view of an object, said device comprising a generator for generating a set of identifiers identifying said object and a memory provided for storing said set of identifiers, characterized in that said generator comprises :
   - first means for fetching from a curve section being part of an identification curve reproducing at least said outline, co-ordinates of said ends of said section in said first and second view and for assigning a same index thereto ;
   - second means for determining three-dimensional co-ordinates of said ends of each section on the basis of said co-ordinates of said ends in said first and second view to which a same index has been assigned, said second means being connected to said first means ;
   - third means for forming elements of said set of identifiers, connected to said second means, said elements comprising each time said index and said three-dimensional co-ordinates to which it is assigned, said third means having an output connected to an input of said memory.

20. An animation device comprising a device as claimed in claim 19, characterized in that it comprises interpollation means.

21. An apparatus according to claim 20, characterized in that it comprises transposition means for mapping the co-ordinates of the vertices of a partial surface into a topological space.

22. A data storage carrier to be used in the apparatus according to one of the claims 19 to 20, characterized in that it is formed by a floppy disc.

Fig. 1.

Fig. 2.

Fig. 3.

Fig. 4.

Fig. 5.

Fig. 6.

Fig. 7.

Fig. 8.

Fig. 9.

Fig. 10.

Fig. 11.

Fig. 12.

14

Fig. 13.

Fig. 14.

Fig. 15.

European
Patent Office

**EUROPEAN SEARCH REPORT**

Application Number

**EP 91 20 0916**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | MECANIQUE MATERIAUX ELECTRICITE, no. 403, January - February 1984, pages 21-25, Paris, FR; J.F. ROTGE: "S.E.R.B.I." <br> * Page 21, column 7, lines 15-17; page 21, column 1, lines 29-35; page 21, column 2, lines 21-35; page 22, column 1, lines 22-28; page 22, column 2, lines 20-23 * <br> — — — | 1-4,7-8, 19-22 | G 06 F 15/72 |
| A | S.M.P.T.E. JOURNAL, vol. 90, no. 12, December 1981, pages 1184-1189, Scarsdale, NY, US; R. STOCK: "Introduction to digital computer graphics for video" <br> * Page 1187, column 1, lines 30-54; page 1187, column 2, lines 19-35; page 1189, column 2, lines 25-26 * <br> — — — | 1-4,19-22 | |
| A | FR-A-2 629 233 (M. EVERAERE) <br> — — — | | |
| A | PROCEEDINGS OF THE 1987 IEEE INTERNATIONAL CONFERENCE ON ROBOTICS AND AUTOMATION, Raleigh, North Carolina, 31st March - 3rd April 1987, pages 1737-1740, IEEE, New York, US; H. AILISTO et al.: "Ferguson patch method representation of 3-D scenes" <br> * Page 1737, column 2, lines 11-26 * <br> — — — — — | 4-6, 11-12, 15-16 | |

TECHNICAL FIELDS
SEARCHED (Int. Cl.5)

G 06 F 15/72

The present search report has been drawn up for all claims

| Place of search | Date of completion of search | Examiner |
|---|---|---|
| The Hague | 26 July 91 | BARBA M. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document